# EUROPÄISCHE PATENTSCHRIFT

(11) **EP 0 522 285 B1**
(45) Veröffentlichungstag und Bekanntmachung des Hinweises auf die Patenterteilung: **16.08.1995**
(21) Anmeldenummer: 92109360.5
(22) Anmeldetag: 03.06.1992
(51) Int. Cl.: F15B 15/10

(54) **Pneumatischer Membranstellantrieb**
Pneumatic membrane servo drive
Servomoteur pneumatique à membrane

(30) Priorität: 06.06.1991 DE 9106924 U; 04.09.1991 DE 9110959 U
(43) Veröffentlichungstag der Anmeldung: 13.01.1993
(73) Patentinhaber: ARCA REGLER GmbH, D-47918 Tönisvorst (DE)
(72) Erfinder: Kaspers, Rüdiger, Dr., W-4154 Tönisvorst 2 (DE)
(74) Vertreter: Paul, Dieter-Alfred, Dipl.-Ing.

(56) Entgegenhaltungen:
- DE-A- 2 628 204
- DE-A- 3 637 068
- DE-A- 3 901 900
- DE-U- 9 110 959
- DE-U- 9 114 872
- US-A- 3 082 744
- US-A- 4 364 301

## Beschreibung

Die Erfindung betrifft einen pneumatischen Membran Stellantrieb für Stellglieder, insbesondere Stellventile, mit einem Antriebsgehäuse und mit einer darin eingespannten Membran, an der ein aus dem Antriebsgehäuse austretendes, mit dem Antriebsorgan bewegliches Antriebselement für die Betätigung des Stetigliedes befestigt ist und die das Antriebsgehäuse in eine Druckkammer und in eine Rückstellkammer mit einem das Antriebsorgan beaufschlagenden Rückstellglied aufteilt, wobei ein Stellungsregler einer der Kammern benachbart angeordnet und über einen internen Luftzuführkanal mit der Druckkammer verbunden ist und wobei ferner von der Rückstellkammer ein Belüftungskanal zu einer Belüftungsöffnung ausgeht.

Solche Membran Stellantriebe sind in vielfältigen Ausführungsformen bekannt (z.B. US-PS 4 922 952; US-PS 4 509 403; US-PS 4 343 224; DE-PS 36 37 068) und dienen dem Antrieb von Stellgliedern, insbesondere Stellventilen, welche vornehmlich im Regelkreis verfahrenstechnischer Anlagen zur Anwendung kommen. Membranstellantriebe weisen als Antriebsgehäuse ein regelmäßig kreisrundes Membrangehäuse auf, das aus zwei miteinander verschraubten, topfförmigen Gehäuseschalen besteht, zwischen deren aufeinanderliegenden Flanschen eine als Antriebsorgan dienende Membran aus flexiblem Werkstoff eingespannt ist. In der Mitte der Membran ist als Antriebselement eine Antriebsstange befestigt, die mit der Membran beweglich gelagert ist und am unteren Ende des Membrangehäuses austritt. Das freie Ende der Antriebsstange ist mit beispielsweise der Ventilstange des Stellventils verbindbar.

Zwecks Verbesserung der Stellgenauigkeit des jeweiligen Stellgliedes wird an dem Membranstellantrieb ein Stellungsregler angebracht. Er gleicht Abweichungen in der jeweiligen Stellung des Stellgliedes aus, die beispielsweise durch Reibung in Stoffbuchsen oder durch Rückwirkungen vom Medium bewirkt werden. Der Stellungsregler wird mit Luftdruck versorgt, und von ihm geht eine Luftzuführleitung zu einer der beiden durch die Membran aufgeteilten Kammern des Membrangehäuses, nämlich der Druckkammer aus. Durch Steuerung der Luftzufuhr wird die Membranstellung und damit die Stellung des Antriebselements beeinflußt. Die Membran wird dabei auf der der Druckkammer abgewandten Seite durch ein Rückstellglied, meist in Form einer oder mehrerer Federn, beaufschlagt, die die Rückstellung der Membran bei einer gesteuerten Druckentlastung innerhalb der Druckkammer bewirkt. Das Rückstellglied ist innerhalb der durch die Membran von der Druckkammer getrennten Rückstellkammer angeordnet. Von der Rückstellkammer geht ein Belüftungskanal aus, durch den die Rückstellkammer Verbindung zur Atmosphäre erhält.

Bei der Ausführungsform gemäß der US-PS 4 922 952 wird der Stellungsregler unmittelbar unterhalb des Membrangehäuses in einem dort vorhandenen Joch - auch "Laterne" genannt - befestigt. Die Luftversorgung der dem Stellungsregler benachbarten Druckkammer erfolgt über einen internen, also nicht nach außen vorstehenden Luftzuführkanal auf kürzestem Wege. Auf diese Weise konnte eine aufwendige und für Beschädigungen anfällige Verrohrung vermieden werden. Die Anordnung hat zudem den Vorteil, daß Dejustierungen beim Transport nicht mehr auftreten können und der Hubabgriff für die Stellungsregelung gegen Berührung und Umwelteinflüsse geschützt ist.

Die vollständig gekapselte Führung des Luftzuführkanals setzt voraus, daß sich die Druckkammer unterhalb und damit benachbart zum Stellungsregler befindet. In nahezu der Hälfte der Anwendungsfälle muß jedoch die Membran von oben mit Druck beaufschlagt werden. Dieser Forderung wird bei Standardmembranstellantrieben dadurch Rechnung getragen, daß das Membrangehäuse oder wenigstens die Membran mit Rückstellglied leicht in umgekehrter Stellung montiert werden können, so daß Druckkammer und Rückstellkammer ihre Lage gegeneinander vertauschen. Um in solchen Fällen eine aufwendige und empfindliche Verrohrung zu vermeiden, ist vorgeschlagen worden, den Stellungsregler innerhalb des Membrangehäuses anzuordnen (DE-PS 36 37 068). Diese Lösung ist jedoch aufwendig und hat eine große Bauhöhe zur Folge. Entsprechendes gibt für die US-A-3 082 744, die einen Servomotor offenbart, der zur Betätigung der hydraulischen Bremsen eines Kraftfahrzeuges dient. Bei diesem Servomotor wird die Druckkammer über einen im Inneren der Rückstellkammer verlegten, flexiblen Schlauch mit Druckluft versorgt.

Der Erfindung liegt deshalb die Aufgabe zugrunde, einen Membran-Stellantrieb der eingangs genannten Art so auszubilden, daß auch dann, wenn die Druckkammer auf der dem Stellungsregler abgewandten Seite der Membran liegt, eine außenliegende Verrohrung insbesondere für den Luftzuführkanal bei geringem Bauvolumen vermieden werden kann.

Diese Aufgabe wird erfindungsgemäß dadurch gelöst, daß das Antriebselement einen Luftführungskanal aufweist, der auf der dem Stellungsregler abgewandten Seite der Membran in die dortige Druckkammer mündet, und daß der Luftführungskanal zu einem Anschluß benachbart zum Stellungsregler geht, wobei der Anschluß mit dem Luftzuführkanal verbunden ist.

Erfindungsgemäß wird also der vom Stellungsregler kommende Luftzuführkanal durch einen Luftführungskanal fortgesetzt, der durch das Antriebselement läuft und damit auch die Membran durchsetzt und erst auf der dem Stellungsregler abgewandten Seite der Membran in die dortige Druckkammer mündet. Es wird also das Antriebselement als Mittel für die Zuführung der Luft zur Druckkammer verwendet. Damit wird erstmals eine interne Verrohrung auch für den Fall angeboten, daß die Druckkammer dem Stellungsregler nicht benachbart ist, ohne daß hierfür eine Vergrößerung der Bauhöhe in Kauf genommen werden muß.

Die gefundene Lösung ist jedoch nicht beschränkt auf den vorstehenden Anwendungsfall. Die Anordnung eines Luftführungskanals im Antriebselement läßt sich nämlich auch in den Fällen, in denen die Druckkammer benachbart zum Stellungsregler angeordnet ist, nutzbringend einsetzen. In diesem Fall kann nämlich die Belüftung der Rückstellkammer über diesen Luftführungskanal geschehen, wenn sein dem Stellungsregler benachbarter Anschluß mit dem dann dort vorhandenen Belüftungskanal verbunden wird. Die Belüftung kann dann auch in den Beschleierungsraum des Stellungsreglers erfolgen, wodurch neben dem Beschleierungsraum auch der Rückstellraum durch die Abluft des Stellungsreglers gegen den Einfluß einer korrosiven Atmosphäre, wie sie teilweise im Bereich der chemischen Industrie vorhanden ist, geschützt wird.

Der Grundgedanke der vorliegenden Erfindung eignet sich insbesondere für Membran Stellantriebe, bei denen Druckkammer und Rückstellkammer, beispielsweise durch Umkehrung der Montage des Membrangehäuses, gegeneinander vertauscht werden können. Für diesen Fall sieht die Erfindung vor, daß das Antriebselement - wie auch in den vorbeschriebenen Fällen - einen Luftführungskanal aufweist, der auf der dem Stellungsregler abgewandten Seite der Membran in die dortige Kammer mündet, und daß der Luftführungskanal zu einem Anschluß benachbart zum Stellungsregler geht, wobei der Anschluß in einer zweiten Montagestellung von Antriebsorgan und Rückstellglied mit dem Stellungsregler verbindbar oder verbunden und die Verbindung zwischen Stellungsregler und der dem Stellungsregler benachbarten Kammer sperrbar oder gesperrt ist und diese Kammer zu der oder einem weiteren Belüftungskanal hin öffenbar oder geöffnet ist, und wobei der Anschluß in einer ersten Montagestellung von Membran und Rückstellglied mit dem Belüftungskanal unter Sperrung der Verbindung zu der dem Stellungsregler benachbarten Kammer verbindbar oder verbunden ist und der Luftzuführkanal zu der dem Stellungsregler benachbarten Kammer öffenbar oder geöffnet ist.

Nach der Erfindung kann also bei einem derartigen Membranstellantrieb die dem Stellungsregler jeweils benachbarte Kammer je nach Montagestellung einmal mit dem Belüftungskanal und einmal mit dem Luftzuführkanal auf direktem Wege verbunden werden, während dann jeweils umgekehrt der in dem Antriebselement verlaufende Luftführungskanal mit dem Luftzuführkanal bzw. dem Belüftungskanal verbindbar ist.

In beiden Fällen erfolgt die Luftführung zu der jeweils dem Stellungsregler entfernten Kammer über den Luftführungskanal im Antriebselement, sei es zum Zwecke der Belüftung, wenn diese Kammer die Rückstellkammer ist, oder zum Zwecke der Luftzufuhr, wenn diese die Druckkammer ist. Damit ist eine vollkommene interne Verrohrung auch für Membran Stellantriebe gefunden, bei denen die Antriebsrichtung mit geringem Montageaufwand umgekehrt werden kann. Die damit verbundenen Vorteile sind deshalb auch bei diesem sehr universellen Typ von Stellantrieb verwirklicht.

Was den Anschluß zu dem Luftführungskanal angeht, besteht durchaus die Möglichkeit, daß er sich mit dem Antriebselement bewegt, wenn flexible Anschlüsse zu dem Luftzuführkanal bzw. Belüftungskanal geschaffen werden. Alternativ dazu besteht die Möglichkeit, daß der Anschluß als Übergaberaum ausgebildet ist, in den der Luftführungskanal mündet und der von einer unbeweglichen Anschlußbuchse umgeben ist, in der das Antriebselement gleitend und nach zwei Seiten abgedichtet geführt ist. Es wird dabei der Umstand genutzt, daß für den Fall, daß die Druckkammer dem Stellungsregler benachbart ist, ohnehin eine Abdichtung bei der Herausführung des Antriebselementes vorgesehen sein muß. Der Übergaberaum kann als Ringraum oder aber auch als schraubenförmig verlaufende Übergabenut ausgebildet sein, deren Nutsteg führend an dem Antriebselement anliegt. Letztere Ausbildung hat den Vorzug der verbesserten Führung des Antriebselements.

Eine besonders einfache Ausführungsform ergibt sich, wenn die Anschlußbuchse in das Antriebsgehäuse hineinragt und der Luftzuführkanal und/oder der Belüftungskanal durch die Anschlußbuchse geht und von dieser in die zu dieser benachbarten Kammer mündet. Es kann die ohnehin schon für die Herausführung des Antriebselementes vorgesehene Öffnung in dem Antriebsgehäuse genutzt werden, wobei zusätzliche Öffnungen für den Luftzuführkanal und/oder den Belüftungskanal entfallen können. Als zweckmäßig hat sich dabei eine Ausführungsform erwiesen, bei der der Luftzuführkanal in der Anschlußbuchse eine Abzweigung mit einem zum Übergaberaum führenden Zuführkanalabschnitt und einem in die benachbarte Kammer mündenden Zuführkanalabschnitt hat, wobei die Zuführkanalabschnitte wechselweise verschließbar sind, um eine Druckluftzuführung einmal in die eine oder einmal in die andere Kammer zu ermöglichen. Dabei kann der in die benachbarte Kammer führende Zuführkanalabschnitt mit einem Belüftungskanalabschnitt verbunden sein, wobei der Belüftungskanalabschnitt und dieser Zuführkanalabschnitt abwechselnd in der Weise verschließbar sind, daß die benachbarte Kammer einmal mit dem Belüftungskanalabschnitt und einmal mit dem Stellungsregler verbunden ist. Zweckmäßigerweise ist dann ein weiterer Belüftungskanalabschnitt vorgesehen, der Verbindung zum Übergaberaum hat, wobei dieser Belüftungskanalabschnitt abwechselnd dann verschließbar bzw. öffenbar ist, wenn der mit dem Zuführkanalabschnitt verbundene Belüftungskanalabschnitt geöffnet bzw. geschlossen ist.

Zum Verschluß von Luftzuführ- und Belüftungskanal und deren Abzweigungen eignen sich in einfachster Form Schraubstopfen, die an den entsprechenden Stellen abdichtend eingesetzt werden können. Denkbar ist jedoch, daß hierfür auch Ventile, insbesondere Magnetventile verwendet werden, wodurch der Montageaufwand bei einer Umkehrung des Antriebes noch weiter verringerbar ist.

In weiterer Ausgestaltung der Erfindung ist vorgesehen, daß Membran und Rückstellglied zusammen mit dem Antriebsgehäuse jeweils nach Lösen der Membran vom Antriebselement von der ersten in die zweite Montagestellung und umgekehrt montierbar sind. Für diesen Fall ist eine Ausbildung besonders vorteilhaft, bei der das Antriebsgehäuse druckkammerseitig einen ersten Luftzuführkanal aufweist, der einen solchen Verlauf hat, daß er in der ersten Montagestellung des Antriebsgehäuses mit dem Stellungsregler gekuppelt ist und direkt in die Druckkammer mündet, wobei er in der zweiten Montagestellung sperrbar ist, und daß das Antriebsgehäuse rückstellkammerseitig einen zweiten Luftzuführkanal aufweist, der einen solchen Verlauf hat, daß er in der zweiten Montagestellung des Antriebsgehäuses mit dem Stellungsregler und dem Anschluß gekuppelt ist, wobei er in der ersten Montagestellung sperrbar ist. Bei dieser Ausbildung sind also die Luftzuführkanäle Teile des Antriebsgehäuses, wobei sie jeweils so geführt sind, daß allein durch die Montage des Antriebsgehäuses in die erste oder zweite Montagestellung die notwendigen Verbindungen zum Stellungsregler in der Weise hergestellt werden, daß der Stellungsregler Verbindung zur Druckkammer hat. Hierdurch wird die Montage außerordentlich vereinfacht.

Es ist ferner vorgesehen, daß das Antriebsgehäuse druckkammerseitig einen ersten Lüftungskanalabschnitt aufweist, der in der zweiten Montagestellung sperrbar und einen solchen Verlauf hat, daß er in der ersten Montagestellung einerseits Verbindung zur Belüftungsöffnung und andererseits Verbindung zum Anschluß hat. Konsequenterweise sollte das Antriebsgehäuse rückstellkammerseitig einen zweiten Belüftungskanalabschnitt aufweisen, der in der ersten Montagestellung sperrbar ist und der einen solchen Verlauf hat, daß er in der zweiten Montagestellung Verbindung zur Belüftungsöffnung hat.

In weiterer Ausgestaltung der Erfindung ist vorgesehen, daß die Membran in unterschiedlicher Höhe am Antriebselement befestigbar ist, um jeweils Platz für das Rückstellglied bei möglichst kleinvolumiger Ausbildung des Antriebsgehäuses zu schaffen.

Das Antriebsgehäuse ist in an sich bekannter Weise zweckmäßig auf einen Sockel montiert, in dem der Luftzuführkanal und der Belüftungskanal, beispielsweise in Form entsprechender Bohrungen, verlaufen. Der Sockel kann insbesondere als sogenannte "Laterne" ausgebildet sein, über die die Befestigung des Stellantriebes an dem eigentlichen Stellglied, beispielsweise einem Ventil, erfolgt. Der Anschluß zu dem Luftführungskanal im Antriebselement ist vorteilhafterweise in einer Öffnung des Sockels angeordnet.

Grundsätzlich besteht die Möglichkeit, den Stellungsregler auch an der Oberseite des Antriebsgehäuses anzuordnen. Bewährt hat sich jedoch die an sich bekannte Anordnung auf der Seite des Austrittes des Antriebselementes, also unterhalb des Antriebsgehäuses und zwischen diesem und dem Stellglied.

Nach einem weiteren Merkmal der Erfindung ist vorgesehen, daß der Luftzuführkanal einen verschließbaren Anschluß nach außen hat. Über diesen Anschluß nach außen kann der Stellungsregler umgangen werden, wobei zur Steuerung ein Magnetventil eingesetzt werden kann.

Schließlich ist gemäß der Erfindung vorgesehen, daß der oder einer der Belüftungskanäle in einen Beschleierungsraum des Stellungsreglers mündet, damit die Rückstellkammer durch die Abluft des Stellungsreglers vor einer eventuellen korrosiven Atmosphäre geschützt wird.

In der Zeichnung ist die Erfindung an Hand eines Ausführungsbeispiels näher veranschaulicht. Es zeigen:
- Figur (1): einen vertikalen Axialschnitt durch einen erfindungsgemäßen Membranstellantrieb in der ersten Montagestellung;
- Figur (2): denselben Schnitt durch den Membranstellantrieb gemäß Figur (1) in der zweiten Montagestellung;
- Figur (3): einen vertikalen Axialschnitt durch einen weiteren erfindungsgemäßen Membranstellantrieb in der ersten Montagestellung;
- Figur (4): denselben Schnitt durch den Membranstellantrieb gemäß Figur (3) in der zweiten Montagestellung;
- Figut (5): einen vertikalen Axialschnitt durch einen dritten, erfindungsgemäßen Membranstellantrieb in der ersten Montagestellung und
- Figur (6): denselben Schnitt durch den Membranstellantrieb gemäß Figur (5) in der zweiten Montagestellung.

Der in den Figuren (1) und (2) dargestellte Membranstellantrieb (1) weist eine jochförmige Laterne (2) auf, über deren nicht dargestellte Unterseite der Membranstellantrieb (1) auf ein Stellglied, beispielsweise ein Stellventil montiert werden kann. An der Laterne (2) ist ein hier nicht näher gezeigter Stellungsregler (3) üblicher Bauart befestigt. Beispiele für Stellungsregler finden sich in der US-PS 4 509 403; US-PS 4 343 224 oder DE-PS 36 37 068, auf deren Inhalt hier Bezug genommen wird.

Auf einem obenseitigen Sockel (4) der Laterne (2) ruht ein Membrangehäuse (5), das aus zwei übereinander angeordneten, kreisförmigen Gehäuseschalen (6, 7) besteht, die an den einander zugewandten Kanten nach außen vorstehende Flansche (8, 9) aufweisen und dort mittels über den Umfang verteilter Schrauben - beispielhaft mit (10) bezeichnet - gegeneinander verspannt sind. Zwischen den Flanschen (8, 9) ist eine Membran (11) aus einem biegsamen Werkstoff, beispielsweise Kautschukmaterial, eingespannt. Die Membran (11) unterteilt den Innenraum des Membrangehäuses (5) in eine Druckkammer (12) und eine Rückstellkammer (13).

In der Rückstellkammer (13) ist ein Membranteller (14) angeordnet, der auf einer Seite an der Membran (11) anliegt und auf der anderen Seite durch über den Umfang verteilte, als Druckfedern ausgebildete Schraubenfedern (15, 16) abgestützt wird. Die Schraubenfedern (15, 16) liegen an der Innenseite der Gehäuseschale (7) an. An der dem Membranteller (14) abgewandten Seite liegt an der Membran (11) ein im Durchmesser wesentlich kleinerer Anschlagteller (17) an, der den unteren bzw. oberen Hubpunkt der Membran (11) durch Anlage an der Gehäuseschale (6) beschreibt.

Durch den Anschlagteller (17), den Stützteller (14) und die Membran (11) geht eine Antriebsstange (18). Sie setzt sich nach unten fort, durchdringt dabei eine Anschlußbuchse (19) und endet in einem nach unten herausragenden Verbindungszapfen (20). Die Antriebsstange (18) ist mit der Membran (11) so verbunden, daß sie die Bewegung der Membran (11) mitmacht. Über den Verbindungszapfen (20) wird diese Bewegung auf die Spindel eines Stellventils übertragen.

Die Anschlußbuchse (19) ist in den Sockel (4) der Laterne (2) ortsfest eingesetzt. Zwischen zwei im vertikalen Abstand zueinander angeordneten Dichtungsringen (21, 22) bildet sich auf Grund eines Abstandes zu der Antriebsstange (18) ein als Anschluß dienender Übergaberingraum (23). In diesen Übergaberingraum (23) mündet eine Querbohrung (24), die mittig durch die Antriebsstange (18) geht und Verbindung zu dem unteren Ende einer Längsbohrung (25) hat, die axial mittig durch die Antriebsstange (18) nach oben verläuft und an deren oberen, freien Ende mündet. Querbohrung (24) und Längsbohrung (25) bilden einen Luftführungskanal.

Die Anschlußbuchse (19) weist gegenüberliegende, von dem Übergaberingraum (23) ausgehende Querkanäle (26, 27) auf. Der in dieser Ansicht rechte Querkanal (27) setzt sich im Sockel (4) in einer Abzweigung (28) von einem durch die Laterne (2) vom Stellungsregler (3) über eine Übergabebohrung (29) nach oben gehenden Luftzuführkanal (30) fort. Der Luftzuführkanal (30) geht nach oben über die Stelle, an der die Abzweigung (28) beginnt, weiter. Eine weitere Abzweigung (31) erstreckt sich von dem Luftzuführkanal (30) in Verlängerung der ersten Abzweigung (28) nach außen und ist dort durch einen Schraubstopfen (32) verschlossen. Über die Abzweigung (31) kann nach Entfernung des Schraubstopfens (32) unter Umgehung des Stellungsreglers (3) von außen Luftdruck zugeführt werden.

Der in diesen Ansichten linke Querkanal (26) setzt sich in einem Belüftungskanal (33) fort, der in einen Lüftungsstopfen (34) mündet. Der Belüftungskanal (33) wird von einem dazu senkrecht verlaufenden Belüftungskanalabschnitt (35) durchsetzt, der nach unten in einen Beschleierungsraum (37) der Laterne (2) mündet, oder auch von der Antriebsstange (18) durchsetzt wird. In diesen Beschleierungsraum (37) wird die Abluft des Stellungsreglers (3) geführt.

Zwischen den äußeren Enden der Querkanäle (26, 27) und der Abzweigung (28) und dem Belüftungskanal (33) verläuft ein Ringkanal (38), der eine Verbindung der einzelnen Kanäle unabhängig von der Stellung der Anschlußbuchse (19) gewährleistet.

Die Darstellungen des Membranstellantriebes (1) in den beiden Figuren unterscheiden sich durch unterschiedliche Montage einzelner Teile, und zwar in folgender Weise.

In der ersten Montagestellung gemäß Figur (1) ruht die Gehäuseschale (6) auf der Oberseite des Sockels (4). Die Gehäuseschale (6) hat mittig eine von einem Kragen (39) begrenzte Öffnung, in dessen Innengewinde die Anschlußbuchse (19) eingeschraubt ist. Gehäuseschale (6) und Membran (11) schließen die Druckkammer (12) ein, die über eine Öffnung (40) Verbindung zu dem Luftzuführkanal (30) und damit zu dem Stellungsregler (3) hat. Die Rückstellkammer (13) befindet sich oberhalb der Druckkammer (12), und demgemäß liegt der Membranteller (14) von oben an der Membran (11) an. Die Gehäuseschale (7) schließt die Rückstellkammer (13) nach oben hin ab. Der Anschlagteller (17) ist zwischen einem Absatz der Antriebsstange (18) und einer auf diese aufgesetzten Klemmhülse (41) des Membrantellers (14) mittels einer Klemmutter (45) eingespannt, während die Membran (11) und der Membranteller (14) zwischen dem Anschlagteller (17) und einem Absatz der Klemmhülse (41) eingeklemmt sind. Hierdurch wird die Verbindung dieser Teile mit der Antriebsstange (18) hergestellt.

Damit die Luftzuführung allein zur Druckkammer (12) erfolgt, ist in die Abzweigung (28) ein abdichtender Schraubstopfen (42) eingesetzt. Es besteht also keine Verbindung zu der Anschlußbuchse (19). Dagegen ist der Belüftungskanal (33) über den Ringkanal (38), den linken Querkanal (26), den Übergaberingraum (23), die Querbohrung (24) und die Längsbohrung (25) mit der Rückstellkammer (13) verbunden. Wird die Membran (11) durch entsprechende Luftzufuhr über den Luftzuführkanal (30), gesteuert durch den Stellungsregler (3), gegen die Wirkung der Schraubenfedern (15, 16) angehoben, wird die dabei in der Rückstellkammer (13) verdrängte Luft über die Längsbohrung (25), die Querbohrung (24), den Übergaberingraum (23), den Querkanal (26) und den Ringkanal (38) in den Belüftungskanal (33) geleitet. Der Lüftungsstopfen (34) bewirkt dann eine definierte Belüftung zur Außenluft.

Über den Belüftungskanalabschnitt (35) besteht dann noch eine Verbindung zwischen Rückstellkammer (13) und Beschleierungsraum (37), so daß zwischen beiden Räumen ein Luftaustausch unter Ausschluß der Außenluft stattfinden kann. Auf diese Weise ist die Rückstellkammer (13) gegen eventuelle korrosive Atmosphäre geschützt. Im übrigen ist der Belüftungskanalabschnitt (35) nach oben hin durch einen weiteren Schraubstopfen (44) nach außen abgeschlossen.

In der zweiten Montagestellung gemäß Figur (2) ist das Membrangehäuse (5) umgedreht worden. Hierzu ist das Membrangehäuse (5) von dem Sockel (4) gelöst und abgehoben worden. Nach Entfernen einer in den Kragen (46) der Gehäuseschale (7) eingeschraubten Verschlußschraube (47) und der auf die Antriebsstange (18) aufgeschraubten Klemmmutter (45) ist das Membrangehäuse (5) von der Antriebsstange (18) abgehoben und um 180° umgedreht worden, so daß jetzt die Gehäuseschale (6) zuoberst und die Gehäuseschale (7) zuunterst liegen. Es ist dann auf der Antriebsstange (18) wieder aufgesetzt worden, so daß diese jetzt die unten liegende Rückstellkammer (13) durchläuft. Der Anschlagteller (17) ist jetzt zwischen der ebenfalls umgesteckten Klemmhülse (41) und der Klemmmutter (45) eingespannt, während Membran (11) und Membranteller (14) zwischen Anschlagteller (17) und dem schon oben erwähnten Absatz der Klemmhülse (41) eingespannt sind.

Nach Einsetzen der Verschlußschraube (47) in den Kragen (39) ist das Membrangehäuse (5) derart auf den Sockel (4) aufgesetzt worden, daß der Kragen (46) in die Öffnung im Sockel (4) hineinragt. In dessen Innengewinde wird dann die Anschlußbuchse (19) derart eingeschraubt, daß das Membrangehäuse (5) mit dem Sockel (4) verspannt wird. Die Rückstellkammer (13) hat nach Entfernung des Schraubenstopfens (44) über eine Öffnung (48) Verbindung zu dem Belüftungskanalabschnitt (35). Sie belüftet deshalb bei Hubbewegungen der Membran (11) über diesen Belüftungskanalabschnitt (35) in den Beschleierungsraum (37) bzw. definiert über die linke Seite des Belüftungskanals (33) und den Lüftungsstopfen (34). Die rechte Seite des Belüftungskanals (33) ist in Richtung auf die Anschlußbuchse (19) durch den zuvor in den Belüftungskanalabschnitt (35) eingesetzten Schraubstopfen (44) verschlossen worden.

Im Luftzuführkanal (30) ist der bei der Montagestellung gemäß Figur (1) die Abzweigung (28) abschließende Schraubstopfen (42) ebenfalls umgesetzt worden, und zwar ist er in die obere Fortsetzung des Luftzuführkanals (30) eingeschraubt worden. Auf diese Weise hat der Luftzuführkanal (30) über die Abzweigung (28), den Ringkanal (38), den rechten Querkanal (27), den Übergaberingraum (23), die Querbohrung (24) und die Längsbohrung (25) Verbindung zu der nun obenliegenden Druckkammer (12). Der Stellungsregler (3) kann somit durch entsprechende Luftzu- und -abfuhr die Hubbewegung der Membran (11) und damit der Antriebsstange (18) über die Druckkammer (12) steuern.

Wie auf Grund der Darstellungen und der vorstehenden Beschreibung deutlich geworden ist, kann die Antriebsrichtung für die Antriebsstange (18) durch nur wenige, einfach auszuführende Montagemaßnahmen umgedreht werden. In beiden Fällen erfolgt die Luftzufuhr zur Druckkammer (12) und die Belüftung der Rückstellkammer (13) über interne Kanäle, so daß auf außenliegende und somit empfindliche und aufwendige Verrohrungen verzichtet werden kann.

Der in den Figuren (3) und (4) dargestellte Membranstellantrieb (51) stimmt in seinem grundsätzlichen Aufbau im wesentlichen mit dem Membranstellantrieb (1) gemäß den Figuren (1) und (2) überein. In den Figuren (3) und (4) sind deshalb für gleiche bzw. funktionsgleiche Teile gleiche Bezugsziffern verwendet worden. Zur Vermeidung von Wiederholungen wird hinsichtlich dieser Bezugsziffern auf die Beschreibung des Membranstellantriebs (1) gemäß den Figuren (1) und (2) Bezug genommen. Nachstehend werden lediglich die Unterschiede zu dem Membranstellantrieb (1) dargestellt.

Das Membrangehäuse (5) ist hier im Unterschied zu dem nach den Figuren (1) und (2) geschlossen ausgebildet, hat also nicht die Öffnungen (40) und (48) für die Zuführung von Druckluft in die Druckkammer (12) bzw. für die Belüftung der Rückstellkammer (13). Entsprechend sind in den Sockel (4) keine Kanäle eingebohrt. Die Luftzuführung bzw. Belüftung geschieht jetzt allein über eine anders gestaltete Anschlußbuchse (52).

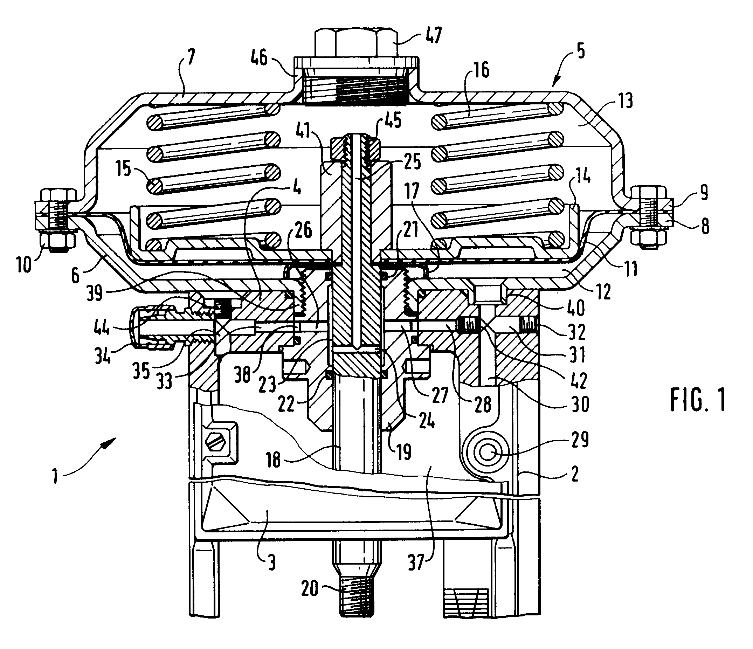

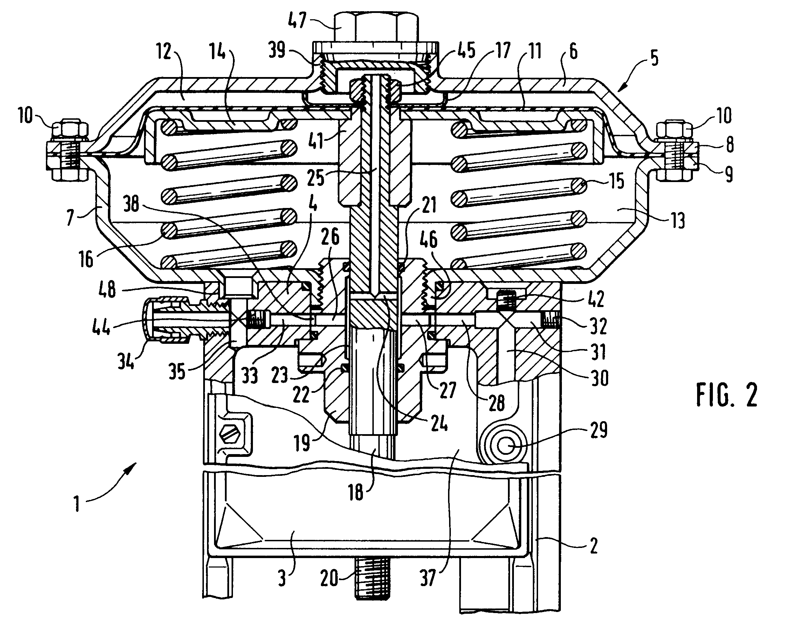

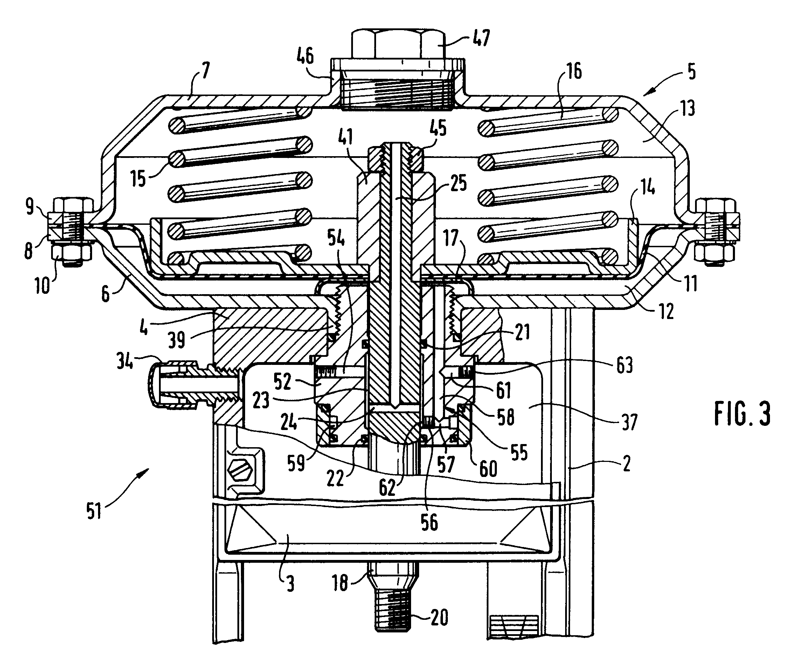

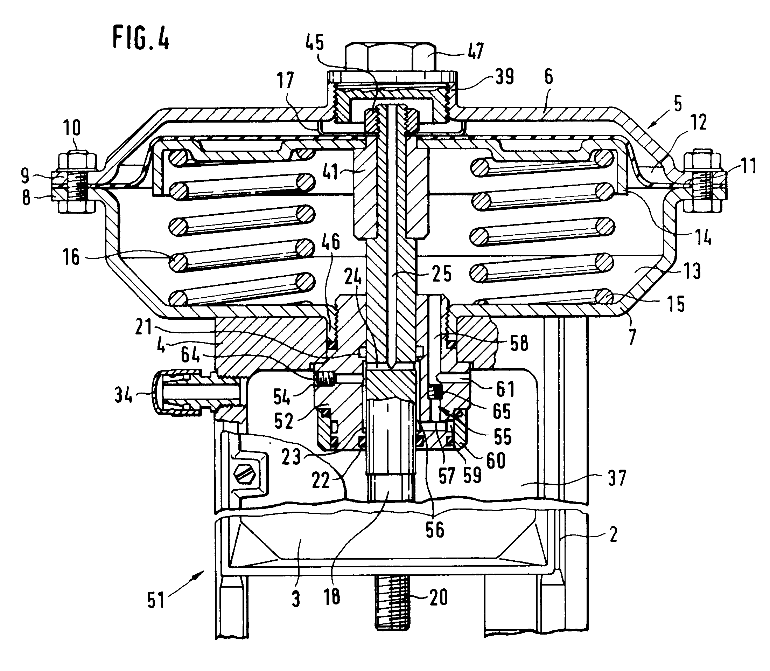

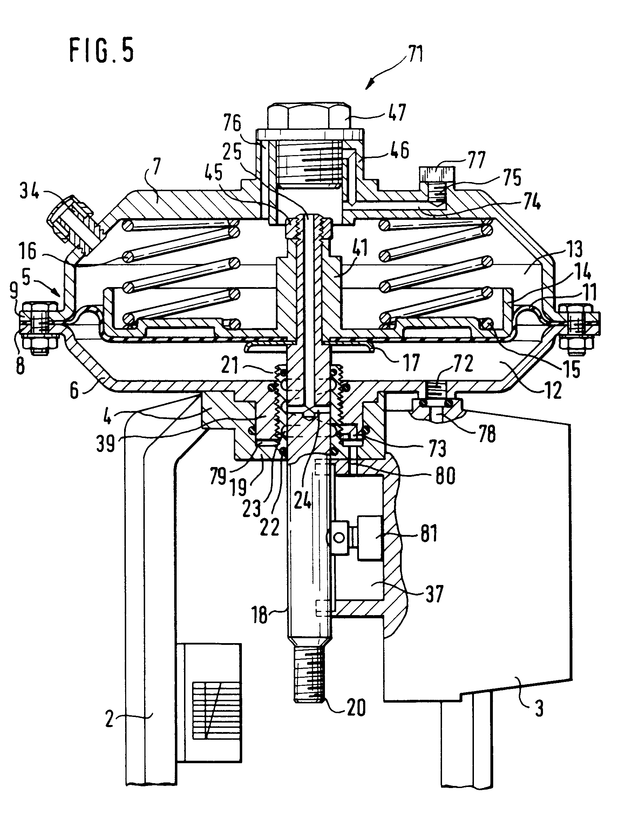

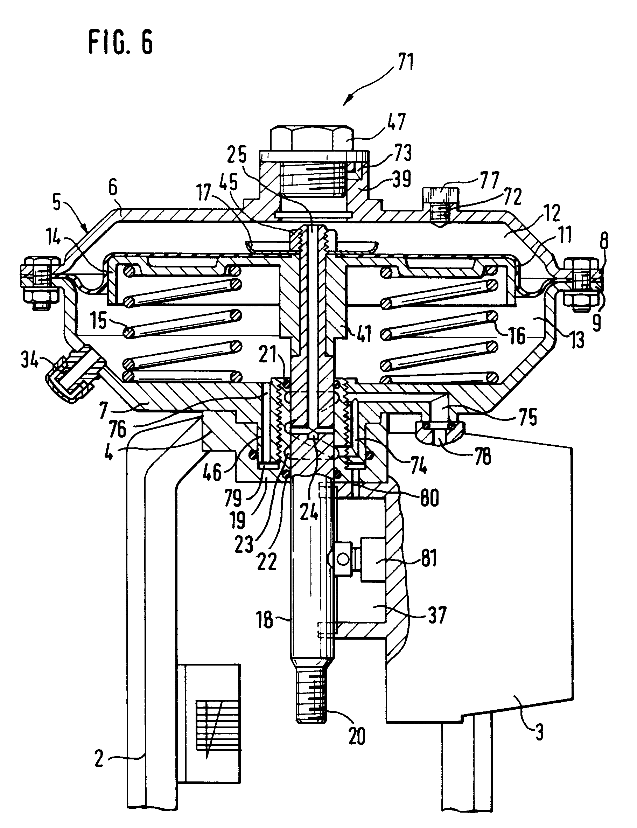

Diese Anschlußbuchse (52) ist genau so wie die Anschlußbuchse (19) in den Sockel (4) der Laterne (2) ortsfest eingesetzt und entweder mit dem Kragen (39) (Figur 3) oder dem Kragen (46) (Figur 4) verschraubt. Sie weist zwischen zwei im vertikalen Abstand zueinander angeordneten Dichtungsringen (21, 22) einen Übergaberingraum (23) auf, ist also insoweit nicht gegenüber der Ausführung gemäß den Figuren (1) und (2) abgewandelt. Von dem Übergaberingraum (23) geht linksseitig und waagerecht ein Belüftungskanalabschnitt (54) ab, der in den Beschleierungsraum (37) mündet. Von diesem Beschleierungsraum (37) geht dann der in den Sockel (4) eingeschraubte Lüftungsstopfen (34) ab.

Auf der gegenüberliegenden Seite ist in die Anschlußbuchse (52) ein insgesamt mit (55) bezeichneter Luftzuführkanal eingebohrt, der aus einem waagerechten Zuführkanalabschnitt (56) und einem von diesem nach oben an einer Abzweigung (57) abgehenden, senkrecht nach oben durchgehenden Zuführkanalabschnitt (58) besteht. Der waagerechte Zuführkanalabschnitt (56) mündet einerseits in den Übergaberingraum (23) und andererseits in einen äußeren Sammelringraum (59), der in die Anschlußbuchse (52) eingeformt ist und außenseitig von einem Abdeckring (60) umgeben ist. Der Sammelringraum (59) steht - was hier nicht näher dargestellt ist - mit dem Stellungsregler (3) in Verbindung, so daß er von diesem mit Druckluft beaufschlagbar ist.

Der senkrechte Zuführkanalabschnitt (58) geht bis zur oberen Stirnseite der Anschlußbuchse (52) und ist dort offen. Etwa mittig von ihm geht ein zweiter Belüftungskanalabschnitt (61) ab. Dieser mündet - wie der erste Belüftungskanalabschnitt (54) - im Beschleierungsraum (37).

Die Montagestellung gemäß Figur (3) entspricht der gemäß Figur (1), d. h. die Druckkammer (12) befindet sich hier unterhalb der Membran (11) und die Rückstellkammer (13) oberhalb der Membran (11) und der Druckkammer (12). In den waagerechten Zuführkanalabschnitt (56) ist zwischen Übergaberingraum (23) und Abzweigung (57) ein abdichtender Schraubstopfen (62) eingesetzt, während der senkrechte Zuführkanalabschnitt (58) offen ist. Der von diesem abzweigende Belüftungskanalabschnitt (61) ist ebenfalls durch einen abdichtenden Schraubstopfen (63) geschlossen.

Wenn vom Stellungsregler (3) Druckluft dem Sammelringraum (59) zugeführt wird, gelangt diese über den waagerechten und den senkrechten Zuführkanalabschnitt (56, 58) in die Druckkammer (12), wodurch die Membran (11) gegen die Wirkung der Schraubenfedern (15, 16) angehoben wird. Dabei wird die in der Rückstellkammer (13) verdrängte Luft über die Längsbohrung (25), die Querbohrung (24), den Übergaberingraum (23) und den ersten, offenen Belüftungskanalabschnitt (54) dem Beschleierungsraum (37) zugeführt. Der Lüftungsstopfen (34) bewirkt dann eine definierte Belüftung zur Außenluft.

Die Montagestellung gemäß Figur (4) entspricht derjenigen gemäß Figur (2), d. h. die Rückstellkammer (13) befindet sich unterhalb der Membran (11) und die Druckkammer (12) darüber. In den ersten Belüftungskanalabschnitt (54) ist ein abdichtender Schraubstopfen (64) eingesetzt. Der bei der Stellung gemäß Figur (3) in dem waagerechten Zuführkanalabschnitt (56) eingesetzte Schraubstopfen (62) und der in dem zweiten Belüftungskanalabschnitt (61) sitzende Schraubstopfen (63) sind entfernt worden. Dagegen ist ein abdichtender Schraubstopfen (65) zwischen der Abzweigung (57) und der Abzweigung des zweiten Belüftungskanalabschnitts (61) eingesetzt.

Bei einer Druckbeaufschlagung über den Stellungsregler (3) gelangt die Druckluft über den waagerechten Zuführkanalabschnitt (56), den Übergaberingraum (23), die Querbohrung (24) und die Längsbohrung (25) in die obenliegende Druckkammer (12), wodurch die Membran (11) nach unten gedrückt wird. Die dabei aus der Rückstellkammer (13) verdrängte Luft gelangt über den oberen Teil des senkrechten Zuführkanalabschnittes (58) und den von ihm abzweigenden Belüftungskanalabschnitt (61) in den Beschleierungsraum (37) und von da aus über den Belüftungsstopfen (34) an die Außenluft.

Der in den Figuren (5) und (6) dargestellte Membranstellantrieb (71) stimmt in seinem grundsätzlichen Aufbau im wesentlichen mit dem Membranstellantrieb (1) gemäß den Figuren (1) und (2) sowie (51) gemäß den Figuren (3) und (4) überein. In den Figuren (5) und (6) sind deshalb für gleiche bzw. funktionsgleiche Teile, die keine wesentlichen Änderungen darstellen, gleiche Bezugsziffern verwendet worden. Zur Vermeidung von Wiederholungen wird hinsichtlich dieser Bezugsziffern auf die Beschreibung des Membranstellantriebs (1) gemäß den Figuren (1) und (2) Bezug genommen. Nachstehend werden lediglich die Unterschiede zu dem Membranstellantrieb (1) dargestellt.

Im Gegensatz zu der Darstellung gemäß den Figuren (1) und (2) sind hier der Stellungsregler (3) und das Membrangehäuse (5) um 90° versetzt gezeichnet, um die Darstellung übersichtlicher zu machen. Tatsächlich weicht die Anordnung des Stellungsreglers (3) nicht von der bei dem Membranstellantrieb (1) ab.

Bei dem vorliegenden Ausführungsbeispiel sind in die Gehäuseschalen (6, 7) eine Reihe von Kanälen eingeformt. So ist in die druckkammerseitige Gehäuseschale (6) ein kurzer, vertikal gerichteter erster Luftzuführkanal (72) eingeformt. Ferner ist in dem Kragen (39) dieser Gehäuseschale (6) ein kurzer, abgewinkelter erster Belüftungskanalabschnitt (73) enthalten. In dem Boden der rückstellkammerseitigen Gehäuseschale (7) ist ein zweiter Luftzuführkanal (74) eingelassen, der einen nach außen gerichteten, genau oberhalb des ersten Luftzuführkanals (72) angeordneten Mündungsabschnitt (75) aufweist. Von diesem Mündungsabschnitt (75) geht ein waagerechter Abschnitt des zweiten Luftzuführkanals (74) bis zum Kragen (46). Desweiteren verläuft in dem Kragen (46) gegenüber dem zweiten Zuführkanal (74) ein zweiter Belüftungskanalabschnitt (76) in vertikaler Richtung, welcher zur Rückstellkammer (13) hin offen ist.

Die Anschlußbuchse (19) weist einen Übergaberaum (23) auf, der von einer schraubenförmig in die Innenseite der Anschlußbuchse (19) eingeformten Nut gebildet wird. Untenseitig ist die Anschlußbuchse (19) hutförmig gestaltet und umgreift dabei das untere Ende des jeweiligen Kragens (39) bzw. (46). Sie ist auf dessen Außenseite aufgeschraubt und gegenüber der Unterseite des Sockels (4) verspannt. Auf diese Weise wird das Membrangehäuse (5) auf dem Sockel (4) gehalten.

Im übrigen ist der Lüftungsstopfen (34) direkt in der rückstellkammerseitigen Gehäuseschale (7) angeordnet. Der Membranteller (14) bildet mit der Klemmhülse (41) eine einstückige Einheit.

Die Montagestellung gemäß Figur (5) entspricht der gemäß Figur (1), d.h. die Druckkammer (12) befindet sich unterhalb der Membran (11) und die Rückstellkammer (13) oberhalb der Membran (11) und der Druckkammer (12). Der zweite Luftzuführkanal (74) ist im Bereich seines Mündungsabschnittes (75) durch eine Verschlußschraube (77) ebenso gesperrt wie der zweite Belüftungskanalabschnitt (76) durch den Rand der Verschlußschraube (47). Auf diese Weise ist die Rückstellkammer (13) nach oben hin abgeschlossen.

Das Membrangehäuse (5) ist derart in den Sockel (4) eingesetzt, daß der erste Belüftungskanalabschnitt auf einer Mündungsöffnung (78) des Stellungsreglers (3) aufsitzt. Über diese Mündungsöffnung (78) geht die Druckluftzufuhr vom Stellungsregler (3) direkt in die darüberliegende Druckkammer (12). Auf diese Weise kann die Membran (11) gegen die Wirkung der Schraubenfedern (15, 16) bewegt werden.

Die Entlüftung der Rückstellkammer (13) geschieht über die Längsbohrung (25) und die Querbohrung (24) in der Antriebsstange (18), ferner über den schraubenförmigen Übergaberaum (23) und eine von diesem ausgehende, kurze Querbohrung in der Anschlußbuchse (19) zu dem ersten Belüftungskanalabschnitt (73). Dieser mündet nach unten in einen Lüftungsringraum (79), welcher von dem hutförmigen Abschnitt der Anschlußbuchse (19) und der unteren Stirnseite des Kragens (39) freigelassen wird. Von diesem Belüftungsringraum (79) geht eine Vertikalbohrung (80) durch die Verschlußbuchse (19) und einen Haltearm des Stellungsregler (3) und mündet in den Beschleierungsraum (37). In diesem Beschleierungsraum (37) ist der Stellungsregler (3) über ein Kupplungsglied (81) mit der Antriebsstange (18) verbunden.

Die Montagestellung gemäß Figur (6) entspricht derjenigen gemäß Figur (2), d.h. die Rückstellkammer (13) befindet sich nunmehr unterhalb der Membran (11) und die Druckkammer (12) darüber. Die umgekehrte Montage geschieht in der gleichen Weise wie zu dem Ausführungsbeispiel gemäß den Figuren (1) und (2) beschrieben. Das Membrangehäuse (5) ist dabei so auf den Sockel (4) aufgesetzt, daß der Kragen (46) der Gehäuseschale (7) in den Sockel (4) hineinragt. Die Montage ist dabei so getroffen worden, daß der zweite Luftzuführkanal (74) mit seinem Mündungsabschnitt (75) in Anlage an die Mündungsöffnung (78) des Stellungsreglers (3) zu liegen kommt. Der zweite Luftzuführkanal (74) hat innerhalb des Kragens (46) einen solchen Verlauf, daß er in die schon oben erwähnte Querbohrung in der Anschlußbuchse (19) mündet, wobei diese Querbohrung die Verbindung zwischen zweitem Luftzuführkanal (74) und Übergaberaum (23) herstellt. Die vom Stellungsregler (3) ausgehende Druckluft gelangt somit über den zweiten Luftzuführkanal (74) in den Übergaberaum (23) und von dort über die Querbohrung (24) und die Längsbohrung (25) in die Druckkammer (12).

Die Belüftung der Rückstellkammer (13) geschieht jetzt über den zweiten Belüftungskanalabschnitt (76), der in der gezeigten Stellung des Membrangehäuses (5) in den Belüftungsringraum (79) mündet. Dieser wiederum hat über die Vertikalbohrung (80) Verbindung zum Beschleierungsraum (37).

Druckkammerseitig ist der erste Luftzuführkanal (72) durch die zuvor von dem zweiten Luftzuführkanal (74) abgeschraubte Verschlußschraube (77) gesperrt. Der erste Belüftungskanalabschnitt (73) ist über die Verschlußschraube (47) verschlossen. Auf diese Weise ist die Druckkammer (12) nach oben hin vollständig abgedichtet.

Wie ohne weiteres zu erkennen ist, zeichnet sich diese Version des Membranstellantriebes (71) dadurch aus, daß die einzelnen Kanalverbindungen sich in sinnvoller Weise durch einfaches Ummontieren des Membrangehäuses (5) von selbst ergeben, d.h. es müssen keine Verschlußstopfen oder dergleichen entfernt oder eingesetzt werden.

## Patentansprüche

1. Pneumatischer Membran-Stellantrieb (1, 51, 71) für Stellglieder, insbesondere Stellventile, mit einem Antriebsgehäuse (5) und mit einer darin eingespannten Membran (11), an der ein aus dem Antriebsgehäuse (5) austretendes, mit der Membran (11) bewegliches Antriebselement (18) für die Betätigung des Stellgliedes befestigt ist und die das Antriebsgehäuse (5) in eine Druckkammer (12) und in eine Rückstellkammer (13) mit einem die Membran (11) beaufschlagenden Rückstellglied (15, 16) aufteilt, wobei ein Stellungsregler (3) einer der Kammern (13) benachbart und über einen internen Luftzuführkanal (30, 28, 55, 74) mit der Druckkammer (12) verbunden ist und wobei ferner von der Rückstellkammer (13) ein Belüftungskanal (35, 58, 76) zu einer Belüftungsöffnung ausgeht,
dadurch gekennzeichnet, daß das Antriebselement (18) einen Luftführungskanal (24, 25) aufweist, der auf der dem Stellungsregler (3) abgewandten Seite der Membran (11) in die dortige Druckkammer (12) mündet, und daß der Luftführungskanal (24, 25) zu einem Anschluß (23) benachbart zum Stellungsregler (3) geht, wobei der Anschluß (23) mit dem Luftzuführkanal (30, 28, 55) verbunden ist.

2. Pneumatischer Membran-Stellantrieb (1, 51, 71) für Stellglieder, insbesondere Stellventile, mit einem Antriebsgehäuse (5) und einer darin eingespannten Membran (11), an der ein aus dem Antriebsgehäuse (5) austretendes, mit der Membran (11) bewegliches Antriebselement (18) für die Betätigung des Stellgliedes befestigt ist und die das Antriebsgehäuse (5) in eine Druckkammer (12) und in eine Rückstellkammer (13) mit einem die Membran (11) beaufschlagenden Rückstellglied (15, 16) aufteilt, wobei ein Stellungsregler (3) einer der Kammern (12) benachbart angeordnet und über einen internen Luftzuführkanal (30, 58, 72) mit der Druckkammer (12) verbunden ist und wobei ferner von der Rückstellkammer (13) ein Belüftungskanal (33, 35, 54, 73) zu einer Belüftungsöffnung ausgeht,
dadurch gekennzeichnet, daß das Antriebselement (18) einen Luftführungskanal (24, 25) aufweist, der auf der dem Stellungsregler (3) abgewandten Seite der Membran (11) in die dortige Rückstellkammer (13) mündet, und daß der Luftführungskanal (24, 25) zu einem Anschluß (23) benachbart zum Stellungsregler (3) geht, wobei der Anschluß (23) mit dem Belüftungskanal (33, 35, 54, 73) verbunden ist.

3. Pneumatischer Membran-Stellantrieb (1, 51, 71) für Stellglieder, insbesondere Stellventile, mit einem Antriebsgehäuse (5) und mit einer darin eingespannten Membran (11), an der ein aus dem Antriebsgehäuse (5) austretendes, mit der Membran (11) bewegliches Antriebselement (18) für die Betätigung des Stellgliedes befestigt ist und die das Antriebsgehäuse (5) in eine Druckkammer (12) und in eine Rückstellkammer (13) mit einem das Antriebsorgan beaufschlagenden Rückstellglied (15, 16) aufteilt, wobei ein Stellungsregler (3) einer der Kammern (12 bzw. 13) benachbart angeordnet und über einen internen Luftzuführkanal (30, 28, 55, 58, 72, 74) mit der Druckkammer (12) verbunden ist und wobei ferner von der Rückstellkammer (13) ein Belüftungskanal (33, 35, 54, 58, 73, 76) zu einer Belüftungsöffnung ausgeht,
dadurch gekennzeichnet, daß zumindest Membran (11) und Rückstellglied (15, 16) in der Weise umgekehrt montierbar sind, daß in einer ersten Montagestellung die Druckkammer (12) und in einer zweiten, umgekehrten Montagestellung die Rückstellkammer (13) dem Stellungsregler (3) benachbart ist, daß das Antriebselement (18) einen Luftführungskanal (24, 25) aufweist, der auf der dem Stellungsregler (3) abgewandten Seite der Membran (11) in die dortige Kammer (12 bzw. 13) mündet, und daß der Luftführungskanal (24, 25) zu einem Anschluß (23) benachbart zum Stellungsregler (3) geht, wobei der Anschluß (23) in der zweiten Montagestellung mit dem Stellungsregler (3) verbindbar oder verbunden ist, die Verbindung zwischen Stellungsregler (3) und der dem Stellungsregler (3) benachbarten Kammer (13) sperrbar oder gesperrt ist und diese Kammer (13) zu dem oder einem weiteren Belüftungskanal (33, 35, 61, 76) hin öffenbar oder geöffnet ist, und wobei der Anschluß (23) in der ersten Montagestellung mit dem Belüftungskanal (33, 35, 54, 73) unter Sperrung der Verbindung mit der dem Stellungsregler (3) benachbarten Kammer (12) verbindbar oder verbunden und der Luftzuführkanal (30, 58, 72) zu der dem Stellungsregler (3) benachbarten Kammer (12) öffenbar oder geöffnet ist.

4. Membran-Stellantrieb nach einem der Ansprüche (1) bis (3),
dadurch gekennzeichnet, daß der Anschluß als Übergaberaum (23) ausgebildet ist, in den der Luftführungskanal (24, 25) mündet und der von einer unbeweglichen Anschlußbuchse (19, 52) umgeben ist, in der das Antriebselement (18) gleitend und nach zwei Seiten abgedichtet geführt ist.

5. Membran-Stellantrieb nach Anspruch (4),
dadurch gekennzeichnet, daß der Übergaberaum (23) als Ringraum ausgebildet ist.

6. Membran-Stellantrieb nach Anspruch (4)
dadurch gekennzeichnet, daß der Übergaberaum (23) als schraubenförmig verlaufende Übergabenut ausgebildet ist, deren Nutsteg führend an dem Antriebselement (18) anliegt.

7. Membran-Stellantrieb nach einem der Ansprüche (4) bis (6),
dadurch gekennzeichnet, daß die Anschlußbuchse (52) in das Antriebsgehäuse (5) hineinragt und daß der Luftzuführkanal (58) und/oder der Belüftungskanal (61) durch die Anschlußbuchse (52) geht und von dieser in die zu dieser benachbarten Kammer (12, 13) mündet.

8. Membran-Stellantrieb nach Anspruch (7),
dadurch gekennzeichnet, daß der Luftzuführkanal (55) eine Abzweigung (57) mit einem zum Übergaberaum (23) führenden Zuführkanalabschnitt (56) und einem in die benachbarte Kammer (12, 13) mündenden Zuführkanalabschnitt (58) hat, wobei die Zuführkanalabschnitte (56, 58) wechselweise verschließbar sind.

9. Membran-Stellantrieb nach Anspruch (8),
dadurch gekennzeichnet, daß der in die benachbarte Kammer (12, 13) führende Zuführkanalabschnitt (56) mit einem Belüftungskanalabschnitt (61) verbunden ist, wobei der Belüftungskanalabschnitt (61) und der Zuführkanalabschnitt (58) abwechselnd in der Weise verschließbar sind, daß die benachbarte Kammer (12, 13) einmal mit dem Belüftungskanalabschnitt (61) und einmal mit dem Stellungsregler (3) verbunden ist.

10. Membran-Stellantrieb nach Anspruch (9),
dadurch gekennzeichnet, daß ein weiterer Belüftungskanalabschnitt (54) vorgesehen ist, der Verbindung zum Übergaberaum (23) hat, wobei dieser Belüftungskanalabschnitt (54) abwechselnd dann verschließbar bzw. öffenbar ist, wenn der mit dem Zuführkanalabschnitt (58) verbundene Belüftungskanalabschnitt (61) geöffnet bzw. verschlossen ist.

11. Membran-Stellantrieb nach einem der Ansprüche (1) bis (10),
dadurch gekennzeichnet, daß zur Sperrung von Luftzuführkanal (30, 31, 55, 56, 58) und Belüftungskanal (33, 35, 54, 61) und deren Kanalabschnitte (31, 56, 58, 54, 61) Schraubstopfen (32, 42, 44, 62, 63, 64, 65) vorgesehen sind.

12. Membran-Stellantrieb nach einem der Ansprüche (3) bis (11),
dadurch gekennzeichnet, daß Membran (11) und Rückstellglied (15, 16) zusammen mit dem Antriebsgehäuse (5) jeweils nach Lösen der Membran (11) vom Antriebselement (18) von der ersten in die zweite Montagestellung und umgekehrt montierbar sind.

13. Membran-Stellantrieb nach Anspruch (12),
dadurch gekennzeichnet, daß das Antriebsgehäuse (5) druckkammerseitig einen ersten Luftzuführkanal (72) aufweist, der einen solchen Verlauf hat, daß er in der ersten Montagestellung des Antriebsgehäuses (5) mit dem Stellungsregler (3) gekuppelt ist, wobei er in der zweiten Montagestellung sperrbar ist, und daß das Antriebsgehäuse (5) rückstellkammerseitig einen zweiten Luftzuführkanal (74) aufweist, der einen solchen Verlauf hat, daß er in der zweiten Montagestellung des Antriebsgehäuses (5) mit dem Stellungsregler (3) gekuppelt ist, wobei der zweite Zuführkanal (74) in der ersten Montagestellung sperrbar ist.

14. Membran-Stellantrieb nach Anspruch (13),
dadurch gekennzeichnet, daß das Antriebsgehäuse (5) druckkammerseitig einen ersten Belüftungskanalabschnitt (73) aufweist, der in der zweiten Montagestellung sperrbar und einen solchen Verlauf bat, daß er in der ersten Montagestellung einerseits Verbindung zu der Belüftungsöffnung (80) und andererseits Verbindung zum Anschluß (23) hat.

15. Membran-Stellantrieb nach Anspruch (13) oder (14),
dadurch gekennzeichnet, daß das Antriebsgehäuse (5) rückstellkammerseitig einen zweiten Belüftungskanalabschnitt (76) aufweist, der in der ersten Montagestellung sperrbar ist und einen solchen Verlauf hat, daß er in der zweiten Montagestellung Verbindung zur Belüftungsöffnung (80) hat.

16. Membran-Stellantrieb nach einem der Ansprüche (1) bis (15),
dadurch gekennzeichnet, daß die Membran (11) in unterschiedlicher Höhe am Antriebselement (18) befestigbar ist.

17. Membran-Stellantrieb nach einem der Ansprüche (1) bis (16),
dadurch gekennzeichnet, daß das Antriebsgehäuse (5) auf einem Sockel (4) montiert ist, in dem der Luftzuführkanal (30, 31) und der Belüftungskanal (33, 35) verlaufen.

18. Membran-Stellantrieb nach Anspruch (17),
dadurch gekennzeichnet, daß der Anschluß (23) in einer Öffnung des Sockels (4) angeordnet ist.

19. Membran-Stellantrieb nach einem der Ansprüche (1) bis (18),
dadurch gekennzeichnet, daß der Stellungsregler (3) auf der Seite des Austrittes des Antriebselements (18) angeordnet ist.

20. Membran-Stellantrieb nach einem der Ansprüche (1) bis (19),
dadurch gekennzeichnet, daß der Luftzuführkanal (30) einen verschließbaren Anschluß (31, 32) nach außen hat.

21. Membran-Stellantrieb nach einem der Ansprüche (1) bis (20),
dadurch gekennzeichnet, daß der oder einer der Belüftungskanäle (31, 33, 54, 61, 73, 76) in einen Beschleierungsraum (37) des Stellungsregelers (3) mündet.

## Claims

1. A pneumatic diaphragm actuating drive (1, 51, 71) for actuators, particularly control valves, having a drive housing (5) and having a diaphragm (11) mounted therein to which a drive element (18) is attached for operating the actuator, which drive element can move with the diaphragm (11) and emerges from the drive housing (5), which diaphragm divides the drive housing (5) into a pressure chamber (12) and into a restoring chamber (13) having a restoring element (15, 16) which acts upon the diaphragm (11), wherein a position regulator (3) adjoins one of the chambers (13) and is connected to the pressure chamber (12) via an internal air admission channel (30, 28, 55, 74), and wherein in addition an aeration channel (35, 58, 76) runs from the restoring chamber (13) to an aeration opening, characterised in that the drive element (18) comprises an air conveying channel (24, 25) which leads, on the side of the diaphragm (11) facing away from the position regulator (3), into the pressure chamber (12) there, and that the air conveying channel (24, 25) runs to a connection (23) adjacent to the position regulator (3), wherein the connection (23) is connected to the air admission channel (30, 28, 55).

2. A pneumatic diaphragm actuating drive (1, 51, 71) for actuators, particularly control valves, having a drive housing (5) and having a diaphragm (11) mounted therein to which a drive element (18) is attached for operating the actuator, which drive element can move with the diaphragm (11) and emerges from the drive housing (5), which diaphragm divides the drive housing (5) into a pressure chamber (12) and into a restoring chamber (13) having a restoring element (15, 16) which acts upon the diaphragm (11), wherein a position regulator (3) is disposed adjacent to one of the chambers (12) and is connected to the pressure chamber (12) via an internal air admission channel (30, 58, 72), and wherein in addition an aeration channel (33, 35, 54, 73) runs from the restoring chamber (13) to an aeration opening, characterised in that the drive element (18) comprises an air conveying channel (24, 25) which leads, on the side of the diaphragm (11) facing away from the position regulator (3), into the restoring chamber (13) there, and that the air conveying channel (24, 25) runs to a connection (23) adjacent to the position regulator (3), wherein the connection (23) is connected to the aeration channel (33, 35, 54, 73).

3. A pneumatic diaphragm actuating drive (1, 51, 71) for actuators, particularly control valves, having a drive housing (5) and having a diaphragm (11) mounted therein to which a drive element (18) is attached for operating the actuator, which drive element can move with the diaphragm (11) and emerges from the drive housing (5), which diaphragm divides the drive housing (5) into a pressure chamber (12) and into a restoring chamber (13) having a restoring element (15, 16) which acts upon the drive element, wherein a position regulator (3) is disposed adjacent to one of the chambers (12; 13) and is connected to the pressure chamber (12) via an internal air admission channel (30, 28, 55, 58, 72, 74), and wherein in addition an aeration channel (33, 35, 54, 58, 73, 76) runs from the restoring chamber (13) to an aeration opening, characterised in that at least the diaphragm (11) and the restoring element (15, 16) can be installed reversibly in such a way that in a first installed position the pressure chamber (12) is adjacent to the position regulator (3) and in a second, reversed installed position the restoring chamber (13) is adjacent to the position regulator, that the drive element (18) comprises an air conveying channel (24, 25) which leads, on the side of the diaphragm (11) facing away from the position regulator (3), into the chamber (12; 13) there, and that the air conveying channel (24, 25) runs to a connection (23) adjacent to the position regulator (3), wherein in the second installed position the connection (23) can be connected or is connected to the position regulator (3), the connection between the position regulator (3) and the chamber (13) adjacent to the position regulator (3) can be closed or is closed, and this chamber (13) can be opened or is open to the aeration channel or to a further aeration channel (33, 35, 61, 76), and wherein in the first installed position the connection (23) can be connected or is connected to the aeration channel (33, 35, 54, 73) with closure of the connection to the chamber (12) adjacent to the position regulator (3), and the air admission chamber (30, 58, 72) can be opened or is open to the chamber (12) adjacent to the position regulator (3).

4. A diaphragm actuating drive according to any one of claims 1 to 3, characterised in that the connection is constructed as a transfer space (23) into which the air conveying channel (24, 25) leads and which is surrounded by a fixed connection sleeve (19, 52) in which the drive element (18) is guided so that it can slide and is sealed on two sides.

5. A diaphragm actuating drive according to claim 4, characterised in that the transfer space (23) is constructed as an annular space.

6. A diaphragm actuating drive according to claim 4, characterised in that the transfer space (23) is constructed as a helically extending transfer channel, the channel rib piece of which is seated against the drive element (18) acting as a guide.

7. A diaphragm actuating drive according to any one of claims 4 to 6, characterised in that the connection sleeve (52) protrudes into the drive housing (5) and that the air admission channel (58) and/or the aeration channel (61) passes through the connection sleeve (52) and leads from the latter into the chamber (12, 13) adjacent thereto.

8. A diaphragm actuating drive according to claim 7, characterised in that the air admission channel (55) has a branch (57) with an admission channel section (56) leading to the transfer space (23) and with an admission channel section (58) leading into the adjacent chamber (12, 13), wherein the admission channel sections (56, 58) can be closed alternately.

9. A diaphragm actuating drive according to claim 8, characterised in that the admission channel section (56) leading into the adjacent chamber (12, 13) is connected to an aeration channel section (61), wherein the aeration channel section (61) and the admission channel section (58) can be closed alternately in such a way that the adjacent chamber (12, 13) is sometimes connected to the aeration channel section (61) and is sometimes connected to the position regulator (3).

10. A diaphragm actuating drive according to claim 9, characterised in that a further aeration channel section (54) is provided which is connected to the transfer space (23), wherein this aeration channel section (54) can be alternately closed or opened when the aeration channel section (61) connected to the admission channel section (58) is opened or closed.

11. A diaphragm actuating drive according to any one of claims 1 to 10, characterised in that screw caps (32, 42, 44, 62, 63, 64, 65) are provided for closing the air admission channel (30, 31, 55, 56, 58) and the aeration channel (33, 35, 54, 61) and their channel sections (31, 56, 58, 54, 61).

12. A diaphragm actuating drive according to any one of claims 3 to 11, characterised in that, together with the drive housing (5), the diaphragm (11) and the restoring element (15, 16) can be installed in the second installed position from the first installed position and vice versa after detaching the diaphragm (11) from the drive element (18) each time.

13. A diaphragm actuating drive according to claim 12, characterised in that the drive housing (5) comprises a first air admission channel (72) on the pressure chamber side, which has a course such that it is coupled to the position regulator (3) in the first installed position of the drive housing (5), wherein it can be closed in the second installed position, and that the drive housing (5) comprises a second air admission channel (74) on the restoring chamber side, which has a course such that it is coupled to the position regulator (3) in the second installed position of the drive housing (5), wherein the second admission channel (74) can be closed in the first installed position.

14. A diaphragm actuating drive according to claim 13, characterised in that the drive housing (5) comprises a first aeration channel section (73) on the pressure chamber side, which can be closed in the second installed position and which has a course such that in the first installed position it is connected on one side to the aeration opening (80) and on the other side to the connection (23).

15. A diaphragm actuating drive according to claim 13 or 14, characterised in that the drive housing (5) comprises a second aeration channel section (76) on the restoring chamber side, which can be closed in the first installed position and which has a course such that it is connected to the aeration opening (80) in the second installed position.

16. A diaphragm actuating drive according to any one of claims 1 to 15, characterised in that the diaphragm (11) can be attached to the drive element (18) at different heights.

17. A diaphragm actuating drive according to any one of claims 1 to 16, characterised in that the drive housing (5) is mounted on a base (4) in which the air admission channel (30, 31) and the aeration channel (33, 35) run.

18. A diaphragm actuating drive according to claim 17, characterised in that the connection (23) is disposed in an opening in the base (4).

19. A diaphragm actuating drive according to any one of claims 1 to 18, characterised in that the position regulator (3) is on the side of emergence of the drive element (18).

20. A diaphragm actuating drive according to any one of claims 1 to 19, characterised in that the air admission channel (30) has an outwardly closable connection (31, 32).

21. A diaphragm actuating drive according to any one of claims 1 to 20, characterised in that the aeration channel or one of the aeration channels (31, 33, 54, 61, 73, 76) leads into a screening space (37) of the position regulator (3).

## Revendications

1. Servo-entraînement pneumatique à membrane (1, 51, 71) pour des organes de régulation, notamment des soupapes de régulation, avec un boîtier d'entraînement (5) et avec une membrane (11) tendue dans ce boîtier, à laquelle est fixé un élément d'entraînement (18) sortant du boîtier d'entraînement (5), mobile avec la membrane (11) et destiné à actionner l'organe de régulation, et laquelle divise le boîtier d'entraînement (5) en une chambre de pression (12) et une chambre de rappel (13) pourvue d'un organe de rappel (15, 16) sollicitant la membrane (11), un régulateur de position (3) étant voisin d'une (13) des chambres et relié à la chambre de pression (12) par l'intermédiaire d'un canal d'apport d'air interne (30, 28, 55, 74), et un canal d'aérage (35, 58, 76) partant de la chambre de rappel (13) pour mener à une ouverture d'aérage,
**caractérisé** en ce que l'élément d'entraînement (18) présente un canal de guidage d'air (24, 25) qui débouche du côté de la membrane (11) opposé au régulateur de position (3) dans la chambre de pression (12), qui se trouve de ce côté, et en ce que le canal de guidage d'air (24, 25) mène à un raccordement (23) voisin du régulateur de position (3), le raccordement (23) étant relié au canal d'apport d'air (30, 28, 55).

2. Servo-entraînement pneumatique à membrane (1, 51, 71) pour des organes de régulation, notamment des soupapes de régulation, avec un boîtier d'entraînement (5) et avec une membrane (11) tendue dans ce boîtier, à laquelle est fixé un élément d'entraînement (18) sortant du boîtier d'entraînement (5), mobile avec la membrane (11) et destiné à actionner l'organe de régulation, et laquelle divise le boîtier d'entraînement (5) en une chambre de pression (12) et une chambre de rappel (13) pourvue d'un organe de rappel (15, 16) sollicitant la membrane (11), un régulateur de position (3) étant disposé au voisinage d'une (12) des chambres et relié à la chambre de pression (12) par l'intermédiaire d'un canal d'apport d'air interne (30, 58, 72), et un canal d'aérage (33, 35, 54, 73) partant de la chambre de rappel (13) pour mener à une ouverture d'aérage,
**caractérisé** en ce que l'élément d'entraînement (18) présente un canal de guidage d'air (24, 25) qui débouche du côté de la membrane (11) opposé au régulateur de position (3) dans la chambre de rappel (13), qui se trouve de ce côté, et en ce que le canal de guidage d'air (24, 25) mène à un raccordement (23) voisin du régulateur de position (3), le raccordement (23) étant relié au canal d'aérage (33, 35, 54, 73).

3. Servo-entraînement pneumatique à membrane (1, 51, 71) pour des organes de régulation, notamment des soupapes de régulation, avec un boîtier d'entraînement (5) et avec une membrane (11) tendue dans ce boîtier, à laquelle est fixé un élément d'entraînement (18) sortant du boîtier d'entraînement (5), mobile avec la membrane (11) et destiné à actionner l'organe de régulation, et laquelle divise le boîtier d'entraînement (5) en une chambre de pression (12) et une chambre de rappel (13) pourvue d'un organe de rappel (15, 16) sollicitant la membrane (11), un régulateur de position (3) étant disposé au voisinage d'une des chambres (12 ou 13) et relié à la chambre de pression (12) par l'intermédiaire d'un canal d'apport d'air interne (30, 28, 55, 58, 72, 74), et un canal d'aérage (33, 35, 54, 58, 73, 76) partant de la chambre de rappel (13) pour mener à une ouverture d'aérage,
**caractérisé** en ce qu'au moins la membrane (11) et l'organe de rappel (15, 16) peuvent être montés en position inversée de telle sorte que la chambre de pression (12) est voisine du régulateur de position (3) dans une première position de montage, tandis que c'est la chambre de rappel (13) qui est voisine de ce dernier dans une seconde position de montage, inversée, en ce que l'élément d'entraînement (18) présente un canal de guidage d'air (24, 25) qui débouche du côté de la membrane (11) opposé au régulateur de position (3) dans la chambre (12 ou 13) qui se trouve de ce côté, et en ce que le canal de guidage d'air (24, 25) mène à un raccordement (23) voisin du régulateur de position (3), ce raccordement (23), dans la seconde position de montage, étant ou pouvant être relié au régulateur de position (3), tandis que la liaison entre le régulateur de position (3) et la chambre (13) voisine du régulateur de position (3) est ou peut être fermée et que cette chambre (13) est ou peut être ouverte vers le canal d'aérage ou un canal d'aérage supplémentaire (33, 35, 61, 76), et le raccordement (23), dans la première position de montage, étant ou pouvant être relié au canal d'aérage (33, 35, 54, 73), tandis que la liaison avec la chambre (12) voisine du régulateur de position (3) est fermée et que le canal d'apport d'air (30, 58, 72) est ou peut être ouvert vers la chambre (12) voisine du régulateur de position (3).

4. Servo-entraînement à membrane selon l'une des revendications 1 à 3, **caractérisé** en ce que le raccordement est réalisé sous la forme d'un espace de transfert (23), dans lequel débouche le canal de guidage d'air (24, 25) et qui est entouré d'une douille de raccordement fixe (19, 52) dans laquelle l'élément d'entraînement (18) est guidé en coulissement et en étanchéité des deux côtés.

5. Servo-entraînement à membrane selon la revendication 4, **caractérisé** en ce que l'espace de transfert (23) est réalisé sous la forme d'un espace annulaire.

6. Servo-entraînement à membrane selon la revendication 4, **caractérisé** en ce que l'espace de transfert (23) est réalisé sous la forme d'une rainure annulaire s'étendant en spirale, dont la paroi s'applique contre l'élément d'entraînement (18) et le guide.

7. Servo-entraînement à membrane selon l'une des revendications 4 à 6, **caractérisé** en ce que la douille de raccordement (52) pénètre dans le boîtier d'entraînement (5), et en ce que le canal d'apport d'air (58) et/ou le canal d'aérage (61) traversent la douille de raccordement (52) et débouchent de cette dernière dans la chambre (12, 13) qui en est voisine.

8. Servo-entraînement à membrane selon la revendication 7, **caractérisé** en ce que le canal d'apport d'air (55) possède une bifurcation (57) avec un tronçon de canal d'apport (56) menant à l'espace de transfert (23) et un tronçon de canal d'apport (58) débouchant dans la chambre voisine (12, 13), les tronçons de canal d'apport (56, 58) pouvant être alternativement fermés.

9. Servo-entraînement à membrane selon la revendication 8, **caractérisé** en ce que le tronçon de canal d'apport (56) menant dans la chambre voisine (12, 13) est relié à un tronçon de canal d'aérage (61), le tronçon de canal d'aérage (61) et le tronçon de canal d'apport (58) pouvant être alternativement fermés de telle sorte que la chambre voisine (12, 13) est reliée, soit au tronçon de canal d'aérage (61), soit au régulateur de position (3).

10. Servo-entraînement à membrane selon la revendication 9, **caractérisé** en ce qu'est prévu un tronçon supplémentaire de canal d'aérage (54) qui communique avec l'espace de transfert (23), ce tronçon de canal d'aérage (54) pouvant être alternativement fermé ou ouvert selon que le tronçon de canal d'aérage (61) relié au tronçon de canal d'apport (58) est ouvert ou fermé.

11. Servo-entraînement à membrane selon l'une des revendications 1 à 10, **caractérisé** en ce que des bouchons filetés (32, 42, 44, 62, 63, 64, 65) sont prévus pour fermer le canal d'apport d'air (30, 31, 55, 56, 58), le canal d'aérage (33, 35, 54, 61) et leurs tronçons de canaux (31, 56, 58, 54, 61).

12. Servo-entraînement à membrane selon l'une des revendications 3 à 11 **caractérisé** en ce que la membrane (11) et l'organe de rappel (15, 16) peuvent être montés conjointement avec le boîtier d'entraînement (5) de la première dans la seconde position de montage et vice-versa, après avoir chaque fois détaché la membrane (11) de l'élément d'entraînement (18).

13. Servo-entraînement à membrane selon la revendication 12, **caractérisé** en ce que le boîtier d'entraînement (5) présente du côté de la chambre de pression un premier canal d'apport d'air (72) qui s'étend de telle sorte qu'il est accouplé au régulateur de position (3) dans la première position de montage du boîtier d'entraînement (5), tandis qu'il peut être fermé dans la seconde position de montage, et en ce que le boîtier d'entraînement (5) présente du côté de la chambre de rappel un second canal d'apport d'air (74) qui s'étend de telle sorte qu'il est couplé au régulateur de position (3) dans la seconde position de montage du boîtier d'entraînement (5), tandis que ce second canal d'apport (74) peut être fermé dans la première position de montage.

14. Servo-entraînement à membrane selon la revendication 13, **caractérisé** en ce que le boîtier d'entraînement (5) présente du côté de la chambre de pression un premier tronçon (73) de canal d'aérage qui peut être fermé dans la seconde position de montage et s'étend de telle sorte que, dans la première position de montage, il communique d'une part avec l'ouverture d'aérage (80) et d'autre part avec le raccordement (23).

15. Servo-entraînement à membrane selon la revendication 13 ou 14, **caractérisé** en ce que le boîtier d'entraînement (5) présente du côté de la chambre de rappel un second tronçon (76) de canal d'aérage qui peut être fermé dans la première position de montage et s'étend de telle sorte que, dans la seconde position de montage, il communique avec l'ouverture d'aérage (80).

16. Servo-entraînement à membrane selon l'une des revendications 1 à 15, **caractérisé** en ce que la membrane (11) peut être fixée à différentes hauteurs sur l'élément d'entraînement (18).

17. Servo-entraînement à membrane selon l'une des revendications 1 à 16, **caractérisé** en ce que le boîtier d'entraînement (5) est monté sur un socle (4) dans lequel s'étendent le canal d'apport d'air (30, 31) et le canal d'aérage (33, 35).

18. Servo-entraînement à membrane selon la revendication 17, **caractérisé** en ce que le raccordement (23) est disposé dans une ouverture du socle (4).

19. Servo-entraînement à membrane selon l'une des revendications 1 à 18, **caractérisé** en ce que le régulateur de position (3) est disposé du côté de la sortie de l'élément d'entraînement (18).

20. Servo-entraînement à membrane selon l'une des revendications 1 à 19, **caractérisé** en ce que le canal d'apport d'air (30) possède un branchement (31, 32) vers l'extérieur qui peut être fermé.

21. Servo-entraînement à membrane selon l'une des revendications 1 à 20, **caractérisé** en ce que le canal d'aérage ou un des canaux d'aérage (31, 33, 54, 61, 73, 76) débouche dans une chambre de voilage (37) du régulateur de position (3).
